# EUROPEAN PATENT SPECIFICATION

(11) **EP 4 226 558 B1**
(45) Date of publication and mention of the grant of the patent: **10.12.2025**
(21) Application number: 21802086.5
(22) Date of filing: 06.10.2021
(51) Int. Cl.: H04L 5/00

(54) **COMPONENT CARRIER SWITCHING FOR WIRELESS COMMUNICATION DEVICES**
KOMPONENTENTRÄGERUMSCHALTUNG FÜR DRAHTLOSE KOMMUNIKATIONSVORRICHTUNGEN
COMMUTATION DE PORTEUSE COMPOSANTE POUR DISPOSITIFS DE COMMUNICATION SANS FIL

(30) Priority: 07.10.2020 GR 20200100606
(43) Date of publication of application: 16.08.2023
(73) Proprietor: QUALCOMM INCORPORATED, San Diego, CA 92121-1714 (US)
(72) Inventor: RICO ALVARINO, Alberto, San Diego, California 92121-1714 (US); GAAL, Peter, San Diego, California 92121-1714 (US); MANOLAKOS, Alexandros, San Diego, California 92121-1714 (US)
(74) Representative: Tomkins & Co
(86) International application number: PCT/US2021/053831
(87) International publication number: WO 2022/076599

(56) References cited:
- QUALCOMM INCORPORATED: "Discussion on 1Tx-2Tx switching impact in RAN1", vol. RAN WG1, no. e-Meeting; 20200817 - 20200821, 8 August 2020 (2020-08-08), XP051918211, Retrieved from the Internet <URL:https://ftp.3gpp.org/tsg_ran/WG1_RL1/TSGR1_102-e/Docs/R1-2006760.zip R1-2006760 Remaining issues for 1Tx-2Tx switching.docx> [retrieved on 20200808]
- NOKIA ET AL: "CR to TS 38.101-1: Time mask requirements for switching between 1Tx and 2Tx transmissions for inter-band UL CA and SUL case", vol. RAN WG4, no. Electronic Meeting; 20200525 - 20200605, 15 May 2020 (2020-05-15), XP051883594, Retrieved from the Internet <URL:https://ftp.3gpp.org/tsg_ran/WG4_Radio/TSGR4_95_e/Docs/R4-2006514.zip R4-2006514 CR to 38101-1 on UL switching between case 1 and case 2.docx> [retrieved on 20200515]
- NOKIA ET AL: "Switching between case 1 and case 2 for two NR FR1 carriers", vol. RAN WG4, no. Electronic Meeting; 20200525 - 20200605, 15 May 2020 (2020-05-15), XP051883593, Retrieved from the Internet <URL:https://ftp.3gpp.org/tsg_ran/WG4_Radio/TSGR4_95_e/Docs/R4-2006513.zip R4-2006513 Switching between case 1 and case 2 for two NR FR1 carriers.doc> [retrieved on 20200515]
- MODERATOR (CHINA TELECOM): "[102-e-LS-TxSwitching-01] Email discussion/approval on maintenance of uplink Tx switching thread #1", vol. RAN WG1, no. e-Meeting; 20200817 - 20200828, 29 August 2020 (2020-08-29), XP051922988, Retrieved from the Internet <URL:https://ftp.3gpp.org/tsg_ran/WG1_RL1/TSGR1_102-e/Docs/R1-2007402.zip R1-2007402 - [102-e-LS-TxSwitching-01].docx> [retrieved on 20200829]

## Description

### RELATED APPLICATION

This application is related to and claims priority of Greek Patent Application No. 20200100606, filed October 7, 2020 in Greece, for "COMPONENT CARRIER SWITCHING FOR WIRELESS COMMUNICATION DEVICES."

### FIELD OF DISCLOSURE

The present disclosure relates generally to electronic devices. More specifically, the present disclosure relates to component carrier switching for wireless communication devices.

### BACKGROUND

In the last several decades, the use of electronic devices has become common. In particular, advances in electronic technology have reduced the cost of increasingly complex and useful electronic devices. Cost reduction and consumer demand have proliferated the use of electronic devices such that they are practically ubiquitous in modern society. As the use of electronic devices has expanded, so has the demand for new and improved features of electronic devices. More specifically, electronic devices that perform new functions and/or that perform functions faster, more efficiently, or with higher quality are often sought after.

Some electronic devices (e.g., cellular phones, smartphones, laptop computers, etc.) communicate with other electronic devices. For example, electronic devices may transmit and/or receive radio frequency (RF) signals to communicate. Improving electronic device communication may be beneficial. 3GPP Draft R1-2006760 describes aspects of 1Tx - 2Tx switching impact in RANI. 3GPP Draft R4-2006514 describes aspects of time mask requirements for switching between 1Tx and 2Tx transmissions.

### SUMMARY

A wireless communication device is described. The wireless communication device includes a processor. The processor is configured to determine to switch from a first component carrier of a first band to a second component carrier. The processor is also configured to determine whether the second component carrier is included in the first band. The processor is further configured to, in a case it is determined that the second component carrier is included in the first band, transmit an uplink signal on the second component carrier.

In the case that it is determined that the second component carrier is included in the first band, the processor may be configured to transmit the uplink signal on the second component carrier without a switching delay. The processor may be configured to, in a case that it is determined that the second component carrier is not included in the first band, transmit an uplink signal on the second component carrier after a switching delay.

The uplink signal may be a 2-port transmission on the second component carrier after a preceding 1-port transmission on the first component carrier. The uplink signal may be a 1-port transmission on the second component carrier after a preceding 2-port transmission on the first component carrier.

The uplink signal may be a 1-port transmission on the second component carrier after a preceding 1-port transmission on the first component carrier when the wireless communication device is configured with switched uplink. The uplink signal may be a 1-port transmission on the second component carrier after a preceding 1-port transmission on the first component carrier when the wireless communication device is configured with dual transmission. In a case that the wireless communication device is configured with a supplementary uplink, the processor may be configured to transmit the supplementary uplink after a switching delay if the supplementary uplink is in a different band from a preceding transmission.

The first band may include at least two component carriers. A second band may include at least one component carrier. Switching between the first band and a second band may include re-tuning a transmit chain or switching transmit chains.

According to the invention, in a case that a first transmission on the first component carrier is a 1-port transmission, a second transmission scheduled for the second component carrier is a 2-port transmission, it is determined that the second component carrier is in the first band, and an operation state indicates that a 2-port transmission is not supported, the processor may be configured to transmit an uplink signal on the second component carrier after a scheduling delay.

A method performed by a wireless communication device is also described. The method includes determining to switch from a first component carrier of a first band to a second component carrier. The method also includes determining whether the second component carrier is included in the first band. The method further includes, in a case it is determined that the second component carrier is included in the first band, transmitting an uplink signal on the second component carrier.

A non-transitory tangible computer-readable medium storing computer-executable code is also described. The computer-readable medium includes code for causing a processor to determine to switch from a first component carrier of a first band to a second component carrier. The computer-readable medium also includes code for causing the processor to determine whether the second component carrier is included in the first band. The computer-readable medium further includes code for causing the processor to, in a case it is determined that the second component carrier is included in the first band, transmitting an uplink signal on the second component carrier.

### BRIEF DESCRIPTION OF THE DRAWINGS

Figure 1 is a block diagram illustrating an example of a wireless communication device in which systems and methods for component carrier switching may be implemented;
Figure 2 is a flow diagram illustrating an example of a method for component carrier switching;
Figure 3 is a diagram illustrating examples of component carrier switching in accordance with some of the techniques described herein;
Figure 4 is a state diagram illustrating an example of states in accordance with some of the techniques described herein;
Figure 5 is a state diagram illustrating another example of states in accordance with some of the techniques described herein;
Figure 6 is a diagram illustrating an example of bands;
Figure 7 is a block diagram illustrating a more specific example of a wireless communication device in which systems and methods for component carrier switching may be implemented;
Figure 8 is a diagram illustrating an example of a smartphone and a base station; and
Figure 9 illustrates certain components that may be included within an electronic device configured to implement various configurations of the systems and methods disclosed herein for component carrier switching.

### DETAILED DESCRIPTION

Some configurations of the systems and methods disclosed herein relate to component carrier switching for wireless communication devices. Wireless communication devices are electronic devices that may communicate with other devices using radio frequency (RF) signals. Some examples of the systems and methods disclosed herein relate to intra-band uplink (UL) carrier aggregation with uplink switching (e.g., uplink transmission switching) for wireless communication devices.

A band is a frequency range for communication. For example, a band may include a frequency range (e.g., an RF range with a bandwidth such as 20 megahertz (MHz)) that may be utilized to transmit one or more signals. In some examples, a band is associated with wireless communication device tuning (e.g., transmit chain tuning, power amplifier (PA) tuning, modulation settings, filtering, and/or antenna port selection). For instance, a wireless communication device may change tuning (e.g., re-tune) and/or may switch transmit chains when switching between bands. Re-tuning and/or switching transmit chains may take time. For example, time may be consumed to switch a transmit chain, change filter tuning, select antenna ports, change PA tuning, and/or establish modulation settings before the wireless communication device transmits on another band.

A carrier is a communication resource (e.g., frequency and/or time resource). For example, a carrier may be a subset of a band that may be utilized to transmit one or more signals. Carriers may be aggregated (e.g., grouped) to provide greater communication resources. In some examples, a wireless communication device may utilize and/or switch between multiple carriers (e.g., aggregated carriers) within a band without re-tuning and/or without switching transmit chains. In some examples, a bandwidth of a transmit chain at a tuning supports transmission on multiple carriers within a band.

Various configurations are now described with reference to the Figures, where like reference numbers may indicate functionally similar elements. The systems and methods as generally described and illustrated in the Figures herein could be arranged and designed in a wide variety of different configurations. Thus, the following more detailed description of several configurations, as represented in the Figures, is not intended to limit scope, as claimed, but is merely representative of the systems and methods.

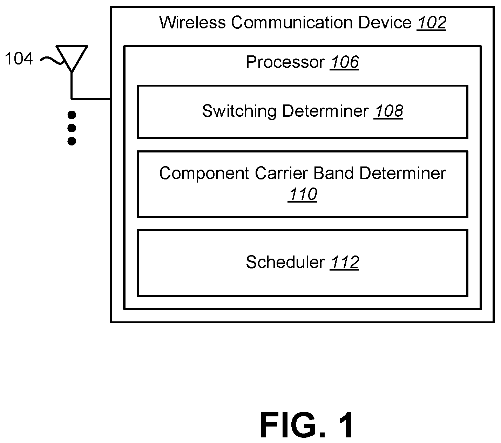

Figure 1 is a block diagram illustrating an example of a wireless communication device 102 in which systems and methods for component carrier switching may be implemented. The wireless communication device 102 (e.g., mobile device) is a device or apparatus for transmitting and/or receiving RF signals. Examples of the wireless communication device 102 include user equipments (UEs), smartphones, tablet devices, computing devices, computers (e.g., desktop computers, laptop computers, etc.), televisions, cameras, virtual reality devices (e.g., headsets), vehicles (e.g., semi-autonomous vehicles, autonomous vehicles, etc.), robots, aircraft, drones, unmanned aerial vehicles (UAVs), healthcare equipment, gaming consoles, Internet of Things (IoT) devices, etc. The wireless communication device 102 includes one or more components or elements. One or more of the components or elements may be implemented in hardware (e.g., circuitry) or a combination of hardware and instructions (e.g., a processor with software and/or firmware stored in memory).

In some configurations, the wireless communication device 102 includes a processor 106 and/or one or more antennas 104. In some configurations, the wireless communication device 102 includes one or more other components and/or elements. For example, the wireless communication device 102 may include an RF front end, one or more power amplifiers, one or more filters, one or more switches, memory, and/or a display (e.g., touchscreen), etc.

The processor 106 enables the wireless communication device 102 to communicate (e.g., transmit one or more signals to one or more other electronic devices and/or receive one or more signals from one or more other electronic devices). For example, the processor 106 may be a modem and/or baseband processor. In some configurations, the processor 106 may be coupled to one or more antennas 104 (through an RF front end, for instance) for transmitting signals. The processor 106 may be circuitry configured to perform one or more functions. For example, the processor 106 includes one or more integrated circuits with circuit components (e.g., transistors, resistors, capacitors, etc.). For instance, the processor 106 includes hardware (e.g., circuitry) for performing one or more functions and/or may execute instructions (e.g., software, firmware, etc.) to perform one or more functions.

In some configurations, the processor 106 includes one or more functionalities that are structurally implemented as hardware (e.g., circuitry). In some configurations, the processor 106 includes a baseband processor, a modem, a modem processor, and/or any combination thereof. In some examples, the wireless communication device 102 and/or the processor 106 may be configured to perform one or more of the methods functions, and/or operations described in relation to one or more of the Figures. In some examples, the wireless communication device 102 and/or processor 106 includes one or more of the components and/or elements described in relation to one or more of the Figures.

The antenna(s) 104 are configured to transmit one or more signals (e.g., electromagnetic signals, RF signals, wireless signals, uplink signals, etc.) provided by the processor 106. For example, the processor 106 may encode, modulate, format, precode, and/or upconvert, etc., the signal(s) for transmission. In some examples, the processor 106 controls and/or tunes one or more components (e.g., PA(s), transmit chain(s), antenna port switch(es), and/or filter(s), etc.) for transmitting the signal(s). For example, the processor 106 may tune one or more components for transmission on one or more bands. In some examples, one or more signals are transmitted to a base station (e.g., eNB, gNB, access point, etc.). In some configurations, the processor 106 executes instructions to perform the one or more functions.

In some configurations, the processor 106 includes a switching determiner 108, a component carrier band determiner 110, and/or a scheduler 112. In some examples, the processor 106 may include switching determiner 108 circuitry, component carrier band determiner 110 circuitry, and/or scheduler 112 circuitry, which may be utilized to perform one or more of the functions and/or operations described herein. In some examples, the processor 106 is configured to execute switching determiner 108 instructions, component carrier band determiner 110 instructions, and/or scheduler 112 instructions, which may be executed to perform one or more of the functions and/or operations described herein. Instructions may be stored in memory (not shown in Figure 1).

In some configurations, the processor 106 (e.g., switching determiner 108) is configured to determine to switch from a first component carrier of a first band to a second component carrier. For example, a first band may include a first component carrier. The processor 106 (e.g., switching determiner 108) may determine to switch from the first component carrier to the second component carrier based on a message or messages (e.g., configuration messages and/or scheduling messages) received from another device (e.g., base station, eNode B (eNB), new radio Node B (gNB), access point, etc.). For example, the switching determiner 108 determines to switch component carriers to transmit on uplink resources (e.g., component carriers and/or slots, etc.) scheduled by a base station.

In some examples, the first band may include at least two component carriers and the second band may include at least one component carrier. In some examples, the first band may include at least one component carrier and the second band may include at least two component carriers. In some examples, the first component carrier is configured for frequency-division duplexing (FDD) and the second component carrier is configured for time-division duplexing (TDD). In some examples, switching between the first band and the second band may include re-tuning a transmit chain and/or switching transmit chains. In some examples, a band (e.g., the first band) is configured for intra-band uplink carrier aggregation. In some examples, uplink transmit switching may be referred to as "SuperUplink."

In some approaches, the switching may enable performing carrier aggregation (e.g., intra-band uplink carrier aggregation) and/or may enable performing multiple-input multiple-output (MIMO). For instance, performing switching may support and/or enable performing uplink carrier aggregation and uplink MIMO with two (e.g., only two) transmit or transmission (Tx) chains. In some examples, performing switching may support and/or enable a single uplink mode (where two transmit chains may be moved from the first component carrier to the second component carrier, for instance). In some examples, the switching corresponds to switching between two modes (e.g., a first mode and a second mode). For instance, a first transmit chain is associated with (e.g., utilized to transmit on) the first component carrier and a second transmit chain is associated with (e.g., utilized to transmit on) the second component carrier in the first mode. The first transmit chain and the second transmit chain may be associated with (e.g., utilized to transmit on) the second component carrier in the second mode. The first mode and the second mode are illustrated in Table (1).

**Table (1)**

| | | |
|---|---|---|
| First Mode | 1 Tx chain on first component carrier | 1 Tx chain on second component carrier |
| Second Mode | 0 Tx chain on first component carrier | 2 Tx chains on second component carrier |

In some examples, the wireless communication device 102 may operate in accordance with one or more options. For instance, a wireless communication device 102 (e.g., UE) may report (to a base station, for example), with capability signaling, whether the wireless communication device 102 supports uplink Tx switching (for inter-band uplink carrier aggregation, for example). A wireless communication device 102 (e.g., UE) may also report, using capability signaling, an option (e.g., first option or second option) that is supported. In some examples, a first option may be switched uplink and a second option may be dual uplink.

For the first option, the wireless communication device 102 may be configured with uplink switching (by a base station, for example), and the wireless communication device 102 may not be configured with and/or scheduled with an uplink transmission on a second component carrier in the first mode. For example, Table (2) illustrates examples of a number of transmit chains (denoted T) assigned for carriers and a number of antenna ports (denoted P) assigned for carriers for the first mode and the second mode in the first option.

**Table (2)**

| Mode | Number of Tx Chains (First Component Carrier + Second Component Carrier) | Number of Antenna Ports for Uplink Transmission (First Component Carrier + Second Component Carrier) |
|---|---|---|
| First Mode | 1T + 1T | 1P + 0P |
| Second Mode | 0T + 2T | 0P + 2P, 0P + 1P |

For the second option, the wireless communication device 102 may be configured with uplink switching (by a base station, for example), and the wireless communication device 102 may be configured with and/or scheduled with an uplink transmission on a first component carrier and on a second component carrier in the first mode. In some examples, the wireless communication device 102 may be configured with and/or scheduled with an uplink transmission on the first component carrier or the second component carrier. In some examples, the wireless communication device 102 may be configured and/or scheduled with an uplink transmission on the first component carrier and the second component carrier concurrently (e.g., in overlapping time frames). For example, Table (3) illustrates examples of a number of transmit chains (denoted T) assigned for carriers and a number of antenna ports (denoted P) assigned for carriers for the first mode and the second mode in the second option.

**Table (3)**

| Mode | Number of Tx Chains (First Component Carrier + Second Component Carrier) | Number of Antenna Ports for Uplink Transmission (First Component Carrier + Second Component Carrier) |
|---|---|---|
| First Mode | 1T + 1T | 1P + 0P, 1P + 1P, 0P + 1P |
| Second Mode | 0T + 2T | 0P + 2P, 0P + 1P |

While two transmit chains are given as examples, the wireless communication device 102 may include and/or utilize one or more transmit chains in accordance with some examples of the techniques described herein.

In some examples, the processor 106 (e.g., component carrier band determiner 110) is configured to determine whether the second component carrier is included in the first band. For example, the processor 106 (e.g., component carrier band determiner 110) may determine whether a target component carrier (e.g., the second component carrier) is in a same band (e.g., the first band) as a current or previous component carrier (e.g., the first component carrier). In some examples, the processor 106 (e.g., component carrier band determiner 110) may determine whether the second component carrier is in the first band (or in the same band as the first component carrier, for instance) based on configuration information and/or scheduling information. For instance, the wireless communication device 102 may receive configuration information and/or scheduling information that identifies component carriers and/or indicates which band includes or which bands include the component carriers. For example, the processor 106 (e.g., component carrier band determiner 110) may determine whether the second component carrier is associated with the first band by determining whether a resource of the component carrier (e.g., frequency resource, carrier frequency, frame, and/or slot, etc.) is associated with the first band (e.g., within the frequency range of the first band, within a portion of a resource grid of the first band, etc.). In some examples, when the wireless communication device 102 is configured with a component carrier (by signaled information from a base station, for instance), the wireless communication device 102 may be configured with a band that the component carrier belongs to. Accordingly, the processor 106 may determine whether a component carrier is in a band based on configuration information (e.g., as indicated by configuration information).

In some examples, the processor 106 (e.g., scheduler 112) is configured to transmit an uplink signal on the second component carrier (without a switching delay, for example) in response to determining that the second component carrier is included in the first band. For instance, the processor 106 (e.g., scheduler 112) may request scheduling for and/or transmit an uplink signal (e.g., information in an uplink channel, physical uplink shared channel (PUSCH), etc.) without accounting for a switching delay (e.g., without waiting for a switching delay).

Transmitting the uplink signal without a switching delay for component carriers on a same band may be different from some approaches, which include a switching delay for switching between any component carriers regardless of whether the component carriers are in the same band. A switching delay is a period of time to allow for re-tuning and/or transmit chain modification (before another transmission is made, for example). Adding a switching delay between component carriers on the same band may be unnecessary and/or may reduce communication speed and/or efficiency. For instance, switching between component carriers on the same band may not incur the same delay as switching between component carriers on different bands. For instance, switching between component carriers on the same band may not require re-tuning and/or changing one or more transmit chains, and therefore a switching delay is unnecessary. Accordingly, adding a switching delay when switching between component carriers on the same band may unnecessarily delay uplink transmissions and/or may reduce link efficiency and/or speed.

In some examples, the processor 106 (e.g., scheduler 112) may be configured to transmit an uplink signal on the second component carrier after a switching delay in response to determining that the second component carrier is not included in the first band (e.g., is on another band and/or a different band than the first band). For instance, the processor 106 (e.g., scheduler 112) may request scheduling for and/or transmit an uplink signal (e.g., information in an uplink channel, physical uplink shared channel (PUSCH), etc.) after a switching delay. In some examples, to transmit an uplink signal, the processor 106 may send a signal to (and/or control) an RF front end to transmit the uplink signal using one or more antennas.

In some configurations, a decision on whether to apply a switching delay (e.g., to not transmit for a period of time) or not may depend on whether the last transmission was on the same component carrier, on a different component carrier in the same band, or on a different component carrier in a different band. In some examples, the uplink signal (e.g., next transmission) is a 2-port transmission on the second component carrier after a preceding 1-port transmission on the first component carrier. For instance, when the wireless communication device 102 is going to transmit (e.g., is scheduled to transmit, has data pending to transmit, etc.) a 2-port transmission on an uplink component carrier and if a preceding uplink transmission is a 1-port transmission on another uplink component carrier in a different band, the wireless communication device 102 may not (e.g., may not be scheduled and/or configured to) transmit during a switching delay (e.g., *N*_{Tx1-Tx2}) on the uplink component carriers. In some examples, the switching delay (e.g., *N*_{Tx1-Tx2}) may be a gap (e.g., a period without uplink transmission). For example, the wireless communication device 102 may omit uplink transmission during the switching delay (e.g., *N*_{Tx1-Tx2}) in accordance with the techniques described herein. In some examples, the amount of the switching delay (e.g., *N*_{Tx1-Tx2}) may be indicated by wireless communication device 102 capability information (e.g., *UplinkTxSwitchingPeriod-r16*).

In some examples, the uplink signal (e.g., next transmission) is a 1-port transmission on the second component carrier after a preceding 2-port transmission on the first component carrier. For instance, when the wireless communication device 102 is going to transmit a 1-port transmission on an uplink component carrier and if a preceding uplink transmission is a 2-port transmission on another uplink component carrier in a different band, the wireless communication device 102 may not (e.g., may not be scheduled and/or configured to) transmit during a switching delay (e.g., *N*_{Tx1-Tx2}) on the uplink component carriers.

In some examples, the uplink signal (e.g., next transmission) is a 1-port transmission on the second component carrier after a preceding 1-port transmission on the first component carrier when the wireless communication device 102 is configured with switched uplink. For instance, if the wireless communication device 102 is configured with the first option with a parameter (e.g., *uplinkTxSwitchingOption*) and is going to transmit a 1-port transmission on an uplink component carrier and if a preceding uplink transmission is a 1-port transmission on another uplink component carrier in a different band, the wireless communication device 102 may not (e.g., may not be scheduled and/or configured to) transmit during a switching delay (e.g., *N*_{Tx1-Tx2}) on the uplink component carriers.

In some examples, if the wireless communication device 102 is configured with the second option with a parameter (e.g., *uplinkTxSwitchingOption*) and is going to transmit a 2-port transmission on an uplink component carrier and if a preceding uplink transmission is a 1-port transmission on the same uplink component carrier or another uplink component carrier in the same band, and the wireless communication device 102 is in an operation state where 2-port transmission is not supported in the same uplink carrier, the wireless communication device 102 may not (e.g., may not be scheduled and/or configured to) transmit during a switching delay (e.g., *N*_{Tx1-Tx2}) on the uplink component carriers. For instance, an operation state may be utilized in some approaches to determine whether to apply a switching delay. For example, this may be a case where a 2-port transmission may not be supported due to an operation state. If an operation state indicates that a 2-port transmission is not supported, a switching delay may be utilized for transmissions on a same component carrier or a component carrier on the same band.

In some examples, the uplink signal (e.g., next transmission) is a 1-port transmission on the second component carrier after a preceding 1-port transmission on the first component carrier when the wireless communication device 102 is configured with dual transmission (e.g., dualTx). For instance, if the wireless communication device 102 is configured with the second option with a parameter (e.g., *uplinkTxSwitchingOption*) and is going to transmit a 1-port transmission on an uplink component carrier and if a preceding uplink transmission is a 1-port transmission on another uplink component carrier in a different band, and the wireless communication device 102 is in an operation state where 2-port transmission is supported on the same uplink component carrier, the wireless communication device 102 may not (e.g., may not be scheduled and/or configured to) transmit during a switching delay (e.g., *N*_{Tx1-Tx2}) on the uplink component carriers.

In some examples, the wireless communication device 102 may not be configured and/or scheduled with concurrent uplink transmissions (e.g., uplink transmission in overlapping time frames) on two antenna ports on one uplink component carrier and a transmission on another uplink component carrier in a different band.

In some configurations, for supplementary uplink (SUL), a decision on whether to apply a switching delay (e.g., to not transmit for a period of time) or not may depend on whether the last transmission was on the same component carrier, on a different component carrier in the same band, or on a different component carrier in a different band. In some examples, in a case that the wireless communication device 102 is configured with a supplementary uplink, the processor 106 (e.g., scheduler 112) may be configured to transmit the supplementary uplink after the switching delay if the supplementary uplink is in a different band from a preceding transmission. For example, the wireless communication device 102 may indicate a capability for uplink switching (to a base station, for instance) with a parameter (e.g., *uplinkTxSwitchRequested-r16*) for a band combination. For instance, in a case that the band combination is configured in a serving cell with two uplink component carriers with a parameter (e.g., higher layer parameter *supplementaryUplink*), if the wireless communication device 102 is configured with uplink switching with a parameter (e.g., *uplinkTxSwitchingPeriod-r16*), and if the wireless communication device 102 is going to transmit an uplink channel or signal on a different uplink in a different band from a preceding transmission occasion (which may be based on one or more downlink control information (DCI(s)) received before a period (e.g., *T₀ - T_{offset}*) or based on one or more higher layer configurations, the wireless communication device 102 may assume that an uplink switching is triggered in a period of a switching delay (e.g., *N*_{Tx1-Tx2}). In this example, *T₀* is a start time of a first symbol of the transmission occasion of the uplink channel or signal and *T_{offset}* is a preparation procedure time of the transmission occasion of the uplink channel or signal. During the switching delay (e.g., *N*_{Tx1-Tx2}), the wireless communication device 102 may not transmit on the uplinks. In other cases, the wireless communication device 102 may transmit uplink transmissions without the switching delay. In some examples, a switch enables performing support of a supplementary uplink mode. In some examples, two transmit chains may be moved from a first component carrier to a second component carrier.

Listing (1) provides an example of instructions for signaling for uplink transmit switching. For instance, the instructions provide an example of how wireless communication device capability may be signaled.

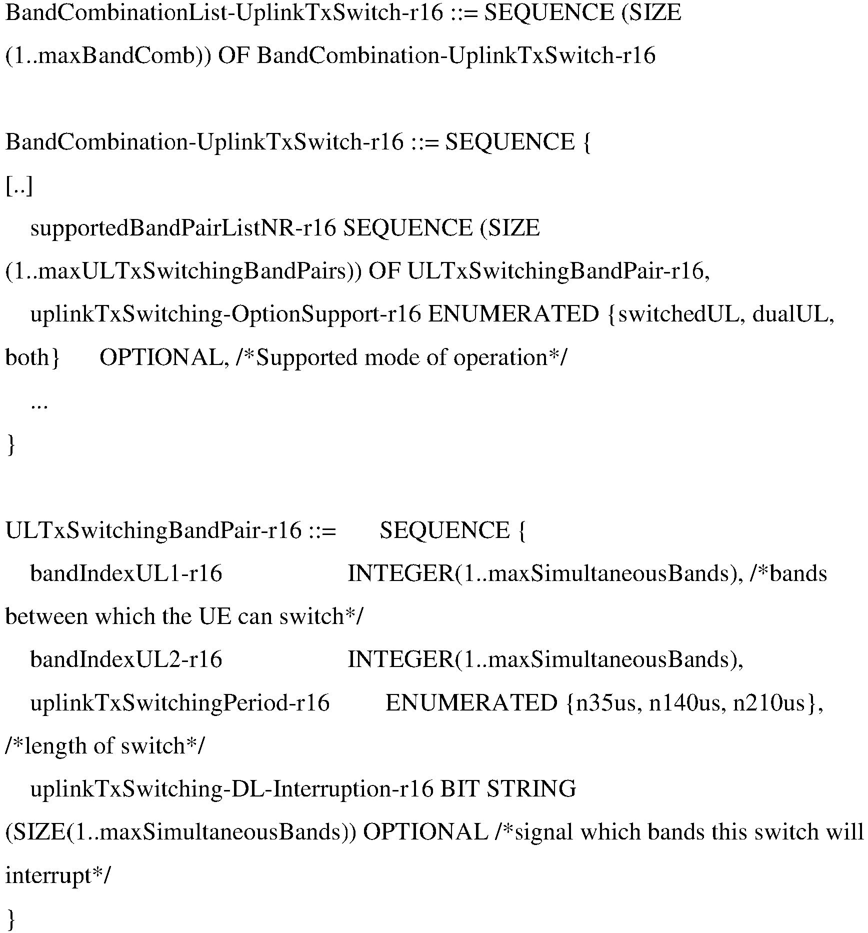

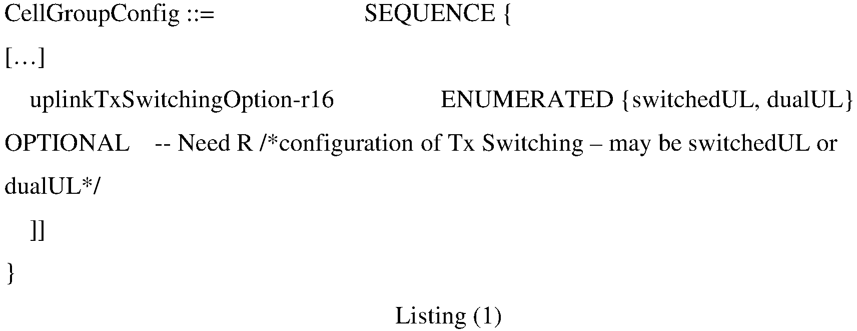

In some configurations, the processor 106 receives signals from a network or networks. For instance, the processor 106 may receive signals from a cellular network, wireless local area network (WLAN), and/or personal area network (PAN), etc. In some configurations, the processor 106 receives signals (e.g., downlink (DL) packets, downlink control information, etc.) from one or more devices (e.g., base station, evolved NodeB (eNodeB), next generation NodeB (gNB), etc.). In some examples, one or more devices (e.g., base stations, access points, wireless communication devices, etc.) may send signals representing digital information to the wireless communication device 102. In some examples, the wireless communication device 102 and/or processor 106 may implement one or more aspects of specifications (e.g., 3rd Generation Partnership Project (3GPP) Release 15, 3GPP Release 16, fifth generation (5G), New Radio (NR), and/or Long-Term Evolution (LTE), etc.). In some examples, the processor 106 may receive signals via an RF front end.

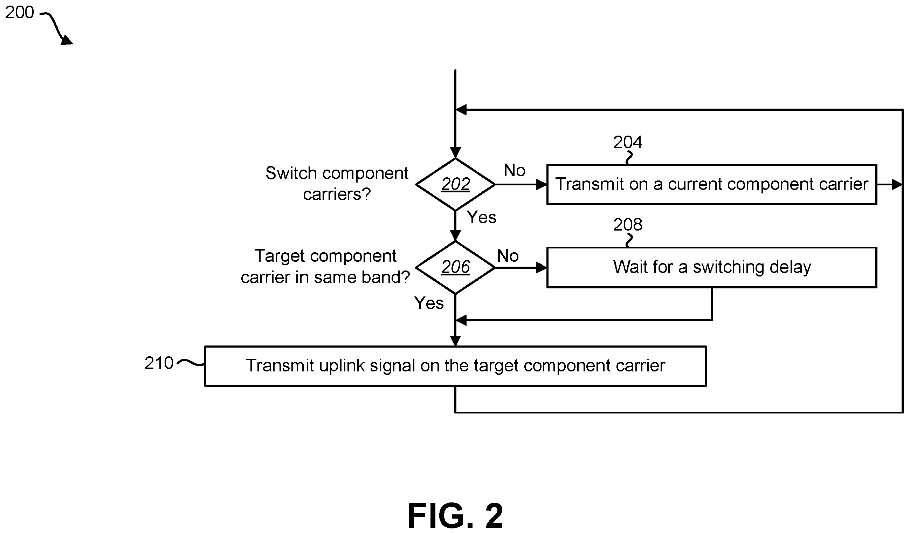

Figure 2 is a flow diagram illustrating an example of a method 200 for component carrier switching. In some examples, the method 200 is performed by a wireless communication device (e.g., the wireless communication device 102 described in relation to Figure 1).

A wireless communication device may determine 202 whether to switch component carriers. In some configurations, determining 202 whether to switch component carriers is performed as described in relation to Figure 1. For example, the wireless communication device may receive signaling to configure and/or schedule the wireless communication device for switching between component carriers. In a case that the wireless communication device does not determine to switch component carriers, the wireless communication device may transmit 204 on a current component carrier.

In a case that the wireless communication device determines to switch component carriers, the wireless communication device may determine 206 whether a target component carrier is in the same band as the component carrier of a preceding transmission (e.g., a transmission before switching, last transmission before switching, etc.). A target component carrier is a component carrier that may be switched to from another component carrier (e.g., current component carrier, component carrier of a preceding transmission, etc.). In some configurations, determining 206 whether the target component carrier is in the same band is performed as described in relation to Figure 1. For example, the wireless communication device may determine whether the target component carrier and/or a resource (e.g., frequency, slot, etc.) of the target component carrier is in the same band as a component carrier of a preceding transmission.

In a case that the target component carrier is in the same band, the wireless communication device may transmit 210 an uplink signal on the target component carrier. In some configurations, transmitting 210 an uplink signal on the target component carrier is performed as described in relation to Figure 1. For example, the wireless communication device may switch to the target component carrier and/or may transmit the uplink signal on the target component carrier. For instance, the wireless communication device may switch to the target component carrier and/or may transmit the uplink signal on the target component carrier without a switching delay (e.g., without a delay for re-tuning and/or changing transmit chains).

In a case that the target component carrier is not in the same band, the wireless communication device may wait 208 for a switching delay. In some examples, waiting 208 for a switching delay (e.g., *N*_{Tx1-Tx2}) may be performed as described in relation to Figure 1. For instance, the wireless communication device may delay transmission while re-tuning and/or changing transmit chains. The wireless communication device may then transmit 210 an uplink signal on the target component carrier after the switching delay. In some configurations, transmitting 210 an uplink signal on the target component carrier after the switching delay is performed as described in relation to Figure 1.

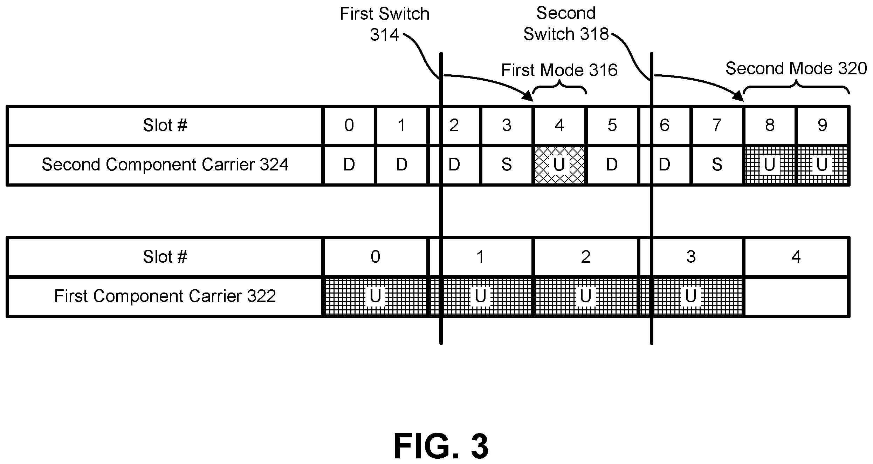

Figure 3 is a diagram illustrating examples of component carrier switching in accordance with some of the techniques described herein. Figure 3 illustrates a first component carrier 322 in an FDD configuration with slots 0-4, and illustrates a second component carrier 324 in a TDD configuration with slots 0-9. In Figure 3, "U" denotes an uplink slot, "D" denotes a downlink slot, and "S" denotes a special slot.

In the scenario of Figure 3, a first switch 314 occurs to transition to the first mode 316. In the first mode 316, one transmit chain may be utilized for the first component carrier 322 and another transmit chain may be utilized for the second component carrier 324. In the first mode 316, a wireless communication device may transmit an uplink signal on the second component carrier 324 in slot 4 while an uplink signal on the first component carrier 322 is transmitted on the first component carrier 322 in slot 2.

In the scenario of Figure 3, a second switch 318 occurs to transition to the second mode 320. In the second mode 320, no transmit chain may be utilized for the first component carrier 322 and two transmit chains may be utilized for the second component carrier 324. In the second mode 320, a wireless communication device may transmit uplink signals on the second component carrier 324 in slots 8 and 9.

In this scenario, the first component carrier 322 and the second component carrier 324 are in a same band. In accordance with some examples of the techniques described herein, there is no switching delay for the first switch 314 or for the second switch 318. For example, transmissions on the first component carrier continue during the first switch 314 and during the second switch 318. For instance, no switching delay (e.g., gap in uplink transmission) on the first component carrier 322 and the second component carrier 324 is used during switching.

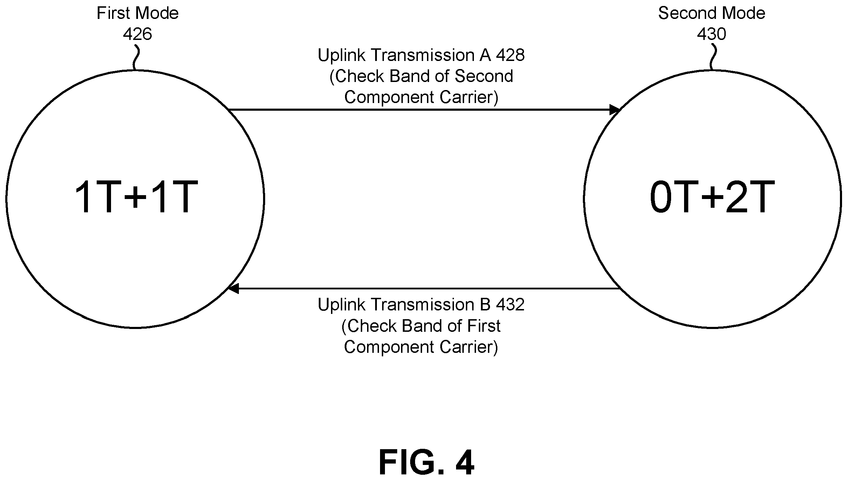

Figure 4 is a state diagram illustrating an example of states in accordance with some of the techniques described herein. In this example, the states correspond to a first mode 426 and a second mode 430 (e.g., the first mode and second mode described in relation to Figure 1, for instance). In this example, operation may occur in accordance with the first option (e.g., first option described in relation to Figure 1, switched uplink, etc.).

In this example, the first mode 426 operates with one transmit chain (denoted T in Figure 4) on a first component carrier and one transmit chain on a second component carrier. In accordance with some examples, when uplink transmission A 428 on the second component carrier is scheduled, a wireless communication device checks the band of the second component carrier. If the band of the second component carrier is the same band of a preceding transmission (on the first component carrier, for example), the state may transition from the first mode 426 to the second mode 430 without a switching delay. If the band of the second component carrier is different from the band of a preceding transmission (on the first component carrier, for example), the state may transition from the first mode 426 to the second mode 430 with a switching delay.

In this example, the second mode 430 operates with two transmit chains on a second component carrier. In accordance with some examples, when uplink transmission B 432 on the first component carrier is scheduled, a wireless communication device checks the band of the first component carrier. If the band of the first component carrier is the same band of a preceding transmission (on the second component carrier, for example), the state may transition from the second mode 430 to the first mode 426 without a switching delay. If the band of the first component carrier is different from the band of a preceding transmission (on the second component carrier, for example), the state may transition from the second mode 430 to the first mode 426 with a switching delay.

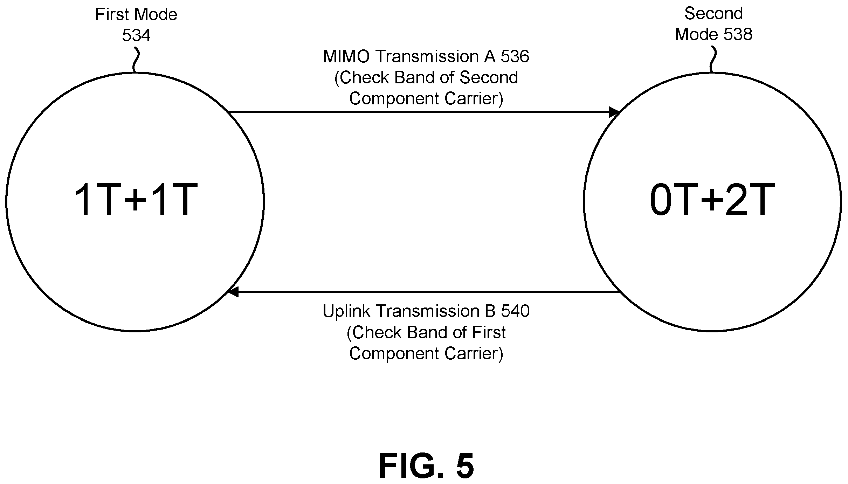

Figure 5 is a state diagram illustrating another example of states in accordance with some of the techniques described herein. In this example, the states correspond to a first mode 534 and a second mode 538 (e.g., the first mode and second mode described in relation to Figure 1, for instance). In this example, operation may occur in accordance with the second option (e.g., second option described in relation to Figure 1, dual transmission, etc.).

In this example, the first mode 534 operates with one transmit chain (denoted T in Figure 5) on a first component carrier and one transmit chain on a second component carrier. In accordance with some examples, when MIMO transmission A 536 on the second component carrier is scheduled, a wireless communication device checks the band of the second component carrier. If the band of the second component carrier is the same band of a preceding transmission (on the first component carrier, for example), the state may transition from the first mode 534 to the second mode 538 without a switching delay. If the band of the second component carrier is different from the band of a preceding transmission (on the first component carrier, for example), the state may transition from the first mode 534 to the second mode 538 with a switching delay.

In this example, the second mode 538 operates with two transmit chains on a second component carrier. In accordance with some examples, when uplink transmission B 540 on the first component carrier is scheduled, a wireless communication device checks the band of the first component carrier. If the band of the first component carrier is the same band of a preceding transmission (on the second component carrier, for example), the state may transition from the second mode 538 to the first mode 534 without a switching delay. If the band of the first component carrier is different from the band of a preceding transmission (on the second component carrier, for example), the state may transition from the second mode 538 to the first mode 534 with a switching delay.

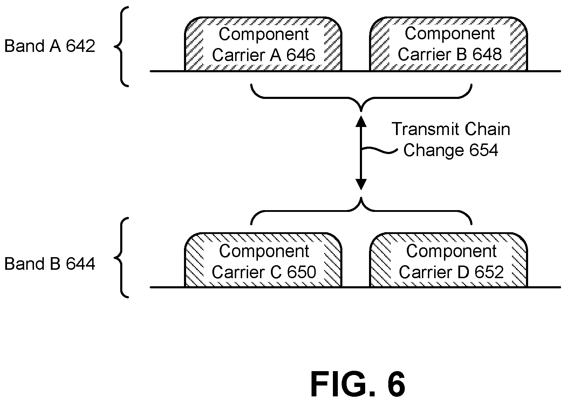

Figure 6 is a diagram illustrating an example of bands 642, 644. In this example, band A 642 includes component carrier A 646 and component carrier B 648. Band B 644 includes component carrier C 650 and component carrier D 652. In this example, band A 642 and/or band B 644 may have intra-band uplink carrier aggregation configured. In the case that band A 642 or band B 644 has intra-band uplink carrier aggregation configured, a transmit chain change 654 (e.g., transmit chain re-tuning and/or transmit chain switching) may be jointly performed for both component carriers (e.g., component carrier A 646a and component carrier B 648 to component carrier C 650 and component carrier D 652).

Some examples of the techniques described herein may be applied and/or utilized for cases where two or more component carriers are utilized. For instance, the example in Figure 6 illustrates four component carriers. In other examples, other numbers of component carriers may be utilized.

In the example of Figure 6, if a previous transmission was in component carrier C 650, and a later (e.g., scheduled, subsequent, and/or next, etc.) transmission is in component carrier A 646, a switching delay may be utilized and/or applied between the previous transmission in component carrier C 650 and the later transmission in component carrier A 646. In another example, if a previous transmission was in component carrier B 648, and a later (e.g., scheduled, subsequent, and/or next, etc.) transmission is in component carrier B 648 (or component carrier A 646 on the same band A 642, for instance), a switching delay may not be utilized and/or applied between the previous transmission in component carrier B 648 and the later transmission in component carrier B 648 (or component carrier A 646, for instance).

Some other approaches may assume that each band includes a single component carrier, and thus a switching delay would occur for every switch between any two component carriers. In some approaches for switching, for instance, a gap may be used for a switch from a 2-port transmission on a first component carrier to a 1-port transmission on a second component carrier. For switched uplink, a transmission chain switch may be used even if another transmission was a 1-port transmission in another component carrier. For dual uplink, transmissions may depend on a previous state. In a supplementary uplink case, for instance, some approaches may dictate that if a previous transmission was in a different component carrier (regardless of band, for example), then a switching period and/or time (e.g., delay) may be applied.

However, if a switch occurs between component carriers on a same band (e.g., component carrier A 646 and component carrier B 648 on band A 642), the switching delay may be unnecessary, as the transmit chain may not be changed. Some of the techniques described herein may enable selective application of switching delays based on whether component carriers involved in a switch are included in a same band or not.

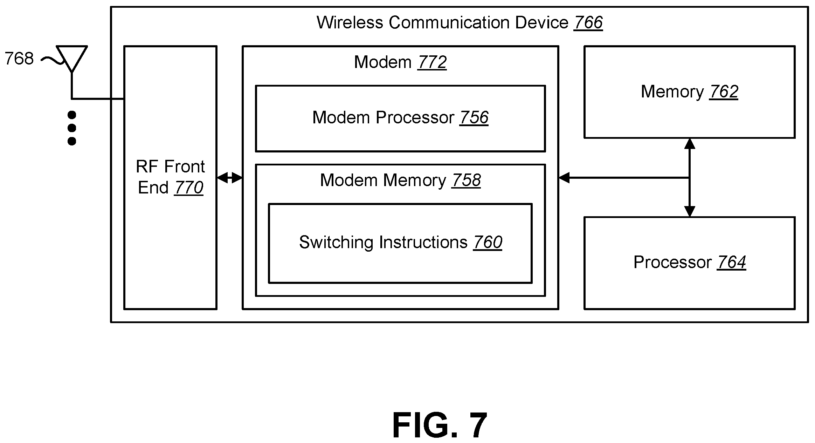

Figure 7 is a block diagram illustrating a more specific example of a wireless communication device 766 in which systems and methods for component carrier switching may be implemented. The wireless communication device 766 may be an example of the wireless communication device 102 described in relation to Figure 1.

In some configurations, the wireless communication device 766 includes one or more antennas 768, an RF front-end (RFE) 770, a modem 772, modem processor 756, modem memory 758, switching instructions 760, memory 762, and/or processor 764. In some configurations, the wireless communication device 766 includes one or more other components and/or elements and/or may omit one or more of the components and/or elements shown.

The RFE 770 receives signals from the modem 772. The RFE 770 may amplify and/or filter the signals, which may be provided to one or more antennas 768 for transmission. The RFE 770 may receive signals from the one or more antennas 768. The RFE 770 may amplify and/or filter the received signals, which may be provided to the modem 772. In some configurations, RFE 770 may include one or more switches, one or more filters, one or more power amplifiers, one or more low noise amplifiers (LNAs), one or more downconverters, and/or one or more upconverters, etc., to enable wireless communication. In some examples, the RFE 770 and/or modem 772 is included in a transceiver.

The modem 772 includes a modem processor 756 (e.g., baseband processor). The modem processor 756 reads switching instructions 760 from the modem memory 758. The switching instructions 760 may include instructions for performing one or more of the functions, operations, procedures, methods, etc., described herein. For example, the modem processor 756 executes the switching instructions 760 to perform one or more of the functions and/or operations described in relation to one or more of Figures 1-6. For instance, the modem processor 756 may execute the switching instructions 760 to determine whether to apply a switching delay when switching between component carriers. The modem 772 may receive data (e.g., data for transmission) from the memory 762 and/or processor 764. The modem 772 may send the data on one or more uplink component carriers in accordance with one or more of the techniques described herein., The memory 762 may be separate from the modem memory 758 in some configurations and/or the processor 764 may be separate from the modem processor 756 in some configurations. For example, the processor 764 may be an application processor that may provide data to the modem for transmission.

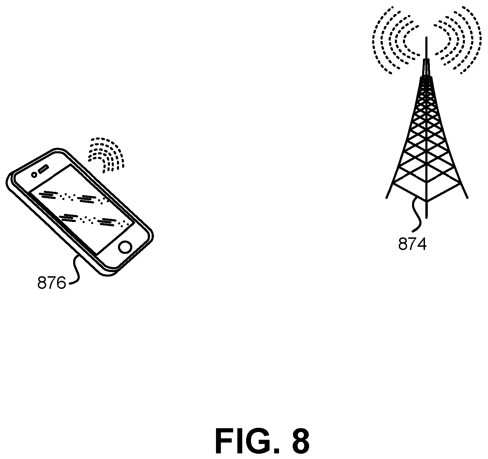

Figure 8 is a diagram illustrating an example of a smartphone 876 and a base station 874. The smartphone 876 may be an example of one or more of the wireless communication devices (e.g., wireless communication device 102 and/or wireless communication device 766, etc.) described herein. In some examples, the smartphone 876 may send capability signaling to the base station 874 indicating whether the smartphone 876 supports uplink transmit switching and/or an option (e.g., switching uplink and/or dual uplink). In some examples, the base station 874 may transmit configuration signaling and/or scheduling signaling to the smartphone 876. For example, the base station 874 may send signaling to configure the smartphone 876 for uplink transmit switching, uplink carrier aggregation, uplink MIMO, an option (e.g., switching uplink or dual uplink), one or more band assignments, one or more component carrier assignments, and/or uplink transmission scheduling. In some examples, the smartphone 876 may perform component carrier switching in accordance with one or more of the techniques described herein to switch between component carriers with or without switching delays based on band(s).

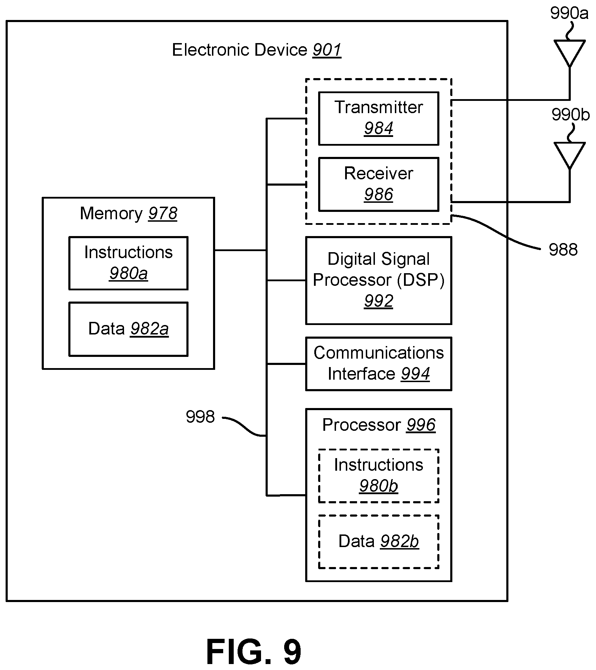

Figure 9 illustrates certain components that may be included within an electronic device 901 configured to implement various configurations of the systems and methods disclosed herein for component carrier switching. The electronic device 901 may be an access terminal, a mobile station, a user equipment (UE), a smartphone, a digital camera, a video camera, a tablet device, a laptop computer, a desktop computer, an Internet of Things (IoT) device, a base station, an access point, a vehicle, a drone, etc. The electronic device 901 may be implemented in accordance with one or more of the wireless communication devices (e.g., wireless communication device 102, wireless communication device 766, etc.) described herein.

The electronic device 901 includes a processor 996. The processor 996 may be a general purpose single- or multi-chip microprocessor (e.g., an ARM), a special purpose microprocessor (e.g., a digital signal processor (DSP)), a microcontroller, a programmable gate array, etc. The processor 996 may be a central processing unit (CPU), a modem processor, and/or a baseband processor. Although a single processor 996 is shown in the electronic device 901, in an alternative configuration, a combination of processors (e.g., an ARM and DSP) could be implemented.

The electronic device 901 also includes memory 978. The memory 978 may be any electronic component capable of storing electronic information. The memory 978 may be embodied as random access memory (RAM), read-only memory (ROM), magnetic disk storage media, optical storage media, flash memory devices in RAM, on-board memory included with the processor 996, programmable read-only memory (PROM), erasable programmable read-only memory (EPROM), electrically erasable PROM (EEPROM), synchronous dynamic random-access memory (SDRAM), registers, and so forth, including combinations thereof.

Data 982a and instructions 980a may be stored in the memory 978. The instructions 980a may be executable by the processor 996 to implement one or more of the methods, functions, and/or operations described herein. Executing the instructions 980a may involve the use of the data 982a that is stored in the memory 978. When the processor 996 executes the instructions 980, various portions of the instructions 980b may be loaded onto the processor 996 and/or various pieces of data 982b may be loaded onto the processor 996. In some configurations, the instructions 980 may be executable to implement and/or perform one or more of the methods (e.g., method 200), operations, functions, and/or procedures described herein.

The electronic device 901 may also include a transmitter 984 and a receiver 986 to allow transmission and reception of signals to and from the electronic device 901. The transmitter 984 and receiver 986 may be collectively referred to as a transceiver 988. One or more antennas 990a-b may be electrically coupled to the transceiver 988. The electronic device 901 may also include (not shown) multiple transmitters, multiple receivers, multiple transceivers, and/or additional antennas.

The electronic device 901 may include a digital signal processor (DSP) 992. The electronic device 901 may also include a communications interface 994. The communications interface 994 may allow and/or enable one or more kinds of input and/or output. For example, the communications interface 994 may include one or more ports and/or communication devices for linking other devices to the electronic device 901. In some configurations, the communications interface 994 may include the transmitter 984, the receiver 986, or both (e.g., the transceiver 988). Additionally or alternatively, the communications interface 994 may include one or more other interfaces (e.g., touchscreen, keypad, keyboard, microphone, camera, etc.). For example, the communication interface 994 may enable a user to interact with the electronic device 901.

The various components of the electronic device 901 may be coupled together by one or more buses, which may include a power bus, a control signal bus, a status signal bus, a data bus, etc. For the sake of clarity, the various buses are illustrated in Figure 9 as a bus system 998.

The term "determining" encompasses a wide variety of actions and, therefore, "determining" can include calculating, computing, processing, deriving, investigating, looking up (e.g., looking up in a table, a database, or another data structure), ascertaining and the like. Also, "determining" can include receiving (e.g., receiving information), accessing (e.g., accessing data in a memory) and the like. Also, "determining" can include resolving, selecting, choosing, establishing, and the like.

The phrase "based on" does not necessarily mean "based only on," unless expressly specified otherwise. In other words, the phrase "based on" may describe "based only on" and/or "based at least on."

The term "processor" should be interpreted broadly to encompass a general purpose processor, a central processing unit (CPU), a microprocessor, a digital signal processor (DSP), a controller, a microcontroller, a state machine, and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a DSP and a microprocessor, a plurality of microprocessors, one or more microprocessors in conjunction with a DSP core, or any other such configuration.

The term "memory" should be interpreted broadly to encompass any electronic component capable of storing electronic information. The term memory may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. Memory is said to be in electronic communication with a processor if the processor can read information from and/or write information to the memory. Memory that is integral to a processor is in electronic communication with the processor.

The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may comprise a single computer-readable statement or many computer-readable statements.

The functions described herein may be implemented in software or firmware being executed by hardware. The functions may be stored as one or more instructions on a computer-readable medium. The terms "computer-readable medium" or "computer-program product" refers to any tangible storage medium that can be accessed by a computer or a processor. By way of example and not limitation, a computer-readable medium may comprise RAM, ROM, EEPROM, compact disc read-only memory (CD-ROM) or other optical disk storage, magnetic disk storage or other magnetic storage devices, or any other medium that can be used to carry or store program code in the form of instructions and/or data structures and that can be accessed by a computer. Disk and disc, as used herein, includes compact disc (CD), laser disc, optical disc, digital versatile disc (DVD), floppy disk, and Blu-ray^{®} disc where disks usually reproduce data magnetically, while discs reproduce data optically with lasers. It should be noted that a computer-readable medium may be tangible and non-transitory. The term "computer-program product" refers to a computing device or processor in combination with code or instructions (e.g., a "program") that may be executed, processed, or computed by the computing device or processor. As used herein, the term "code" may refer to software, instructions, code, or data that is/are executable by a computing device or processor.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio and microwave, then the coaxial cable, fiber optic cable, twisted pair, DSL, or wireless technologies such as infrared, radio and microwave are included in the definition of transmission medium.

The methods disclosed herein comprise one or more steps or actions for achieving the described method. The method steps and/or actions may be interchanged with one another without departing from the scope of the claims. In other words, unless a specific order of steps or actions is required for proper operation of the method that is being described, the order and/or use of specific steps and/or actions may be modified without departing from the scope of the claims.

Further, it should be appreciated that modules and/or other appropriate means for performing the methods and techniques described herein, can be downloaded, and/or otherwise obtained by a device. For example, a device may be coupled to a server to facilitate the transfer of means for performing the methods described herein. Alternatively, various methods described herein can be provided via a storage means (e.g., random access memory (RAM), read-only memory (ROM), a physical storage medium such as a compact disc (CD) or floppy disk, etc.), such that a device may obtain the various methods upon coupling or providing the storage means to the device.

As used herein, the term "and/or" may be interpreted to mean one or more items. For example, the phrase "A, B, and/or C" may be interpreted to mean any of: only A, only B, only C, A and B (but not C), B and C (but not A), A and C (but not B), or all of A, B, and C. As used herein, the phrase "at least one of" may be interpreted to mean one or more items. For example, the phrase "at least one of A, B, and C" or the phrase "at least one of A, B, or C" may be interpreted to mean any of: only A, only B, only C, A and B (but not C), B and C (but not A), A and C (but not B), or all of A, B, and C. As used herein, the phrase "one or more of" may be interpreted to mean one or more items. For example, the phrase "one or more of A, B, and C" or the phrase "one or more of A, B, or C" may be interpreted to mean any of: only A, only B, only C, A and B (but not C), B and C (but not A), A and C (but not B), or all of A, B, and C.

It is to be understood that the claims are not limited to the precise configuration and components illustrated above. Various modifications, changes, and variations may be made in the arrangement, operation, and details of the systems, methods, and apparatus described herein without departing from the scope of the claims. For example, one or more of the operations, functions, elements, aspects, etc., described herein may be omitted or combined.

## Claims

1. A wireless communication device, comprising:
a processor, wherein the processor is configured to:
determine to switch from a first component carrier (322) of a first band to a second component carrier;
determine whether the second component carrier (324) is included in the first band; and
in a case it is determined that the second component carrier is included in the first band, transmit an uplink signal on the second component carrier;
wherein in a case that a first transmission on the first component carrier is a 1-port transmission, a second transmission scheduled for the second component carrier is a 2-port transmission, it is determined that the second component carrier is in the first band, and an operation state indicates that a 2-port transmission is not supported, the processor is configured to transmit the uplink signal on the second component carrier after a scheduling delay.

2. The wireless communication device of claim 1, wherein in the case that it is determined that the second component carrier is included in the first band, the processor is configured to transmit the uplink signal on the second component carrier without a switching delay.

3. The wireless communication device of claim 1, wherein the processor is configured to, in a case that it is determined that the second component carrier is not included in the first band, transmit an uplink signal on the second component carrier after a switching delay.

4. The wireless communication device of claim 1, wherein the uplink signal is a 2-port transmission on the second component carrier after a preceding 1-port transmission on the first component carrier.

5. The wireless communication device of claim 1, wherein the uplink signal is a 1-port transmission on the second component carrier after a preceding 2-port transmission on the first component carrier.

6. The wireless communication device of claim 1, wherein the uplink signal is a 1-port transmission on the second component carrier after a preceding 1-port transmission on the first component carrier when the wireless communication device is configured with switched uplink.

7. The wireless communication device of claim 1, wherein the uplink signal is a 1-port transmission on the second component carrier after a preceding 1-port transmission on the first component carrier when the wireless communication device is configured with dual transmission.

8. The wireless communication device of claim 1, wherein in a case that the wireless communication device is configured with a supplementary uplink, the processor is configured to transmit the supplementary uplink after a switching delay if the supplementary uplink is in a different band from a preceding transmission.

9. The wireless communication device of claim 1, wherein the first band comprises at least two component carriers, and wherein a second band comprises at least one component carrier.

10. The wireless communication device of claim 1, wherein switching between the first band and a second band comprises re-tuning a transmit chain or switching transmit chains.

11. A method performed by a wireless communication device, comprising:
determining to switch from a first component carrier (322) of a first band to a second component carrier;
determining whether the second component carrier (324) is included in the first band; and
in a case it is determined that the second component carrier is included in the first band, transmitting an uplink signal on the second component carrier;
wherein in a case that a first transmission on the first component carrier is a 1-port transmission, a second transmission scheduled for the second component carrier is a 2-port transmission, it is determined that the second component carrier is in the first band, and an operation state indicates that a 2-port transmission is not supported, transmitting the uplink signal on the second component carrier after a scheduling delay.

12. A non-transitory tangible computer-readable medium storing computer-executable code which, when executed by a processor, causes the processor:
to determine to switch from a first component carrier (322) of a first band to a second component carrier;
to determine whether the second component carrier (324) is included in the first band to, in a case it is determined that the second component carrier is included in the first band, transmit an uplink signal on the second component carrier;
wherein in a case that a first transmission on the first component carrier is a 1-port transmission, a second transmission scheduled for the second component carrier is a 2-port transmission,
it is determined that the second component carrier is in the first band, and an operation state indicates that a 2-port transmission is not supported, transmitting the uplink signal on the second component carrier after a scheduling delay.

## Patentansprüche

1. Ein drahtloses Kommunikationsgerät, aufweisend:
einen Prozessor, wobei der Prozessor konfiguriert ist zum:
Bestimmen des Wechselns von einem ersten Komponententräger (322) eines ersten Bands zu einem zweiten Komponententräger,
Bestimmen, ob der zweite Komponententräger (324) in dem ersten Band enthalten ist, und
wenn bestimmt wird, dass der zweite Komponententräger in dem ersten Band enthalten ist, Senden eines Aufwärtsstrecke-Signals auf dem zweiten Komponententräger,
wobei, wenn eine erste Sendung auf dem ersten Komponententräger eine 1-Port-Sendung ist, eine für den zweiten Komponententräger geplante zweite Sendung eine 2-Port-Sendung ist, bestimmt wird, dass der zweite Komponententräger in dem ersten Band ist, und ein Betriebszustand angibt, dass eine 2-Port-Sendung nicht unterstützt wird, der Prozessor konfiguriert ist zum Senden des Aufwärtsstrecke-Signals auf dem zweiten Komponententräger nach einer Planungsverzögerung.

2. Drahtloses Kommunikationsgerät nach Anspruch 1, wobei, wenn bestimmt wird, dass der zweite Komponententräger in dem ersten Band enthalten ist, der Prozessor konfiguriert ist zum Senden des Aufwärtsstrecke-Signals auf dem zweiten Komponententräger ohne eine Wechselverzögerung.

3. Drahtloses Kommunikationsgerät nach Anspruch 1, wobei der Prozessor konfiguriert ist zum, wenn bestimmt wird, dass der zweite Komponententräger nicht in dem ersten Band enthalten ist, Senden eines Aufwärtsstrecke-Signals auf dem zweiten Komponententräger nach einer Wechselverzögerung.

4. Drahtloses Kommunikationsgerät nach Anspruch 1, wobei das Aufwärtsstrecke-Signal eine 2-Port-Sendung auf dem zweiten Komponententräger nach einer vorausgehenden 1-Port-Sendung auf dem ersten Komponententräger ist.

5. Drahtloses Kommunikationsgerät nach Anspruch 1, wobei das Aufwärtsstrecke-Signal eine 1-Port-Sendung auf dem zweiten Komponententräger nach einer vorausgehenden 2-Port-Sendung auf dem ersten Komponententräger ist.

6. Drahtloses Kommunikationsgerät nach Anspruch 1, wobei das Aufwärtsstrecke-Signal eine 1-Port-Sendung auf dem zweiten Komponententräger nach einer vorausgehenden 1-Port-Sendung auf dem ersten Komponententräger ist, wenn das drahtlose Kommunikationsgerät mit einer gewechselten Aufwärtsstrecke konfiguriert ist.

7. Drahtloses Kommunikationsgerät nach Anspruch 1, wobei das Aufwärtsstrecke-Signal eine 1-Port-Sendung auf dem zweiten Komponententräger nach einer vorausgehenden 1-Port-Sendung auf dem ersten Komponententräger ist, wenn das drahtlose Kommunikationsgerät mit einer dualen Sendung konfiguriert ist.

8. Drahtloses Kommunikationsgerät nach Anspruch 1, wobei, wenn das drahtlose Kommunikationsgerät mit einer ergänzenden Aufwärtsstrecke konfiguriert ist, der Prozessor konfiguriert ist für das Senden der ergänzenden Aufwärtsstrecke nach einer Wechselverzögerung, wenn die ergänzende Aufwärtsstrecke ein anderes Band als bei einer vorausgehenden Sendung ist.

9. Drahtloses Kommunikationsgerät nach Anspruch 1, wobei das erste Band wenigstens zwei Komponententräger aufweist, und wobei ein zweites Band wenigstens einen Komponententräger aufweist.

10. Drahtloses Kommunikationsgerät nach Anspruch 1, wobei das Wechseln zwischen dem ersten Band und einem zweiten Band ein erneutes Abstimmen einer Sendekette oder ein Wechseln von Sendeketten aufweist.

11. Ein Verfahren, das durch ein drahtloses Kommunikationsgerät durchgeführt wird, aufweisend:
Bestimmen des Wechselns von einem ersten Komponententräger (322) eines ersten Bands zu einem zweiten Komponententräger,
Bestimmen, ob der zweite Komponententräger (324) in dem ersten Band enthalten ist, und
wenn bestimmt wird, dass der zweite Komponententräger in dem ersten Band enthalten ist, Senden eines Aufwärtsstrecke-Signals auf dem zweiten Komponententräger,
wobei, wenn eine erste Sendung auf dem ersten Komponententräger eine 1-Port-Sendung ist, eine für den zweiten Komponententräger geplante zweite Sendung eine 2-Port-Sendung ist, bestimmt wird, dass der zweite Komponententräger in dem ersten Band ist, und ein Betriebszustand angibt, dass eine 2-Port-Sendung nicht unterstützt wird, Senden des Aufwärtsstrecke-Signals auf dem zweiten Komponententräger nach einer Planungsverzögerung.

12. Ein nicht-transitorisches, materielles, computerlesbares Medium, das einen computerausführbaren Code speichert, der bei einer Ausführung durch einen Prozessor den Prozessor veranlasst zum:
Bestimmen des Wechselns von einem ersten Komponententräger (322) eines ersten Bands zu einem zweiten Komponententräger,
Bestimmen, ob der zweite Komponententräger (324) in dem ersten Band enthalten ist, und
wenn bestimmt wird, dass der zweite Komponententräger in dem ersten Band enthalten ist, Senden eines Aufwärtsstrecke-Signals auf dem zweiten Komponententräger,
wobei, wenn eine erste Sendung auf dem ersten Komponententräger eine 1-Port-Sendung ist, eine für den zweiten Komponententräger geplante zweite Sendung eine 2-Port-Sendung ist, bestimmt wird, dass der zweite Komponententräger in dem ersten Band ist, und ein Betriebszustand angibt, dass eine 2-Port-Sendung nicht unterstützt wird, Senden des Aufwärtsstrecke-Signals auf dem zweiten Komponententräger nach einer Planungsverzögerung.

## Revendications

1. Un dispositif de communication sans fil, comprenant :
un processeur, dans lequel le processeur est configuré pour :
déterminer de commuter d'une première porteuse composante (322) d'une première bande à une deuxième porteuse composante ;
déterminer si la deuxième porteuse composante (324) est incluse dans la première bande ; et
dans un cas où il est déterminé que la deuxième porteuse composante est incluse dans la première bande, transmettre un signal de liaison montante sur la deuxième porteuse composante,
dans lequel, dans le cas où une première transmission sur la première porteuse composante est une transmission à 1 port, une deuxième transmission programmée pour la deuxième porteuse composante est une transmission à 2 ports, il est déterminé que la deuxième porteuse composante est dans la première bande, et un état de fonctionnement indique qu'une transmission à 2 ports n'est pas prise en charge, le processeur est configuré pour transmettre le signal de liaison montante sur la deuxième porteuse composante après un retard de programmation.

2. Le dispositif de communication sans fil de la revendication 1, dans lequel, dans le cas où il est déterminé que la deuxième porteuse composante est incluse dans la première bande, le processeur est configuré pour transmettre le signal de liaison montante sur la deuxième porteuse composante sans retard de commutation.

3. Le dispositif de communication sans fil de la revendication 1, dans lequel le processeur est configuré pour, dans le cas où il est déterminé que la deuxième porteuse composante n'est pas incluse dans la première bande, transmettre un signal de liaison montante sur la deuxième porteuse composante après un retard de commutation.

4. Dispositif de communication sans fil selon la revendication 1, dans lequel le signal de liaison montante est une transmission à 2 ports sur la deuxième porteuse composante après une transmission précédente à 1 port sur la première porteuse composante.

5. Dispositif de communication sans fil selon la revendication 1, dans lequel le signal de liaison montante est une transmission à 1 port sur la deuxième porteuse composante après une transmission à 2 ports précédente sur la première porteuse composante.

6. Dispositif de communication sans fil selon la revendication 1, dans lequel le signal de liaison montante est une transmission à 1 port sur la deuxième porteuse composante après une transmission à 1 port précédente sur la première porteuse composante lorsque le dispositif de communication sans fil est configuré avec une liaison montante commutée.

7. Le dispositif de communication sans fil de la revendication 1, dans lequel le signal de liaison montante est une transmission à 1 port sur la deuxième porteuse composante après une transmission précédente à 1 port sur la première porteuse composante lorsque le dispositif de communication sans fil est configuré avec une double transmission.

8. Le dispositif de communication sans fil de la revendication 1, dans lequel, dans le cas où le dispositif de communication sans fil est configuré avec une liaison montante supplémentaire, le processeur est configuré pour transmettre la liaison montante supplémentaire après un retard de commutation si la liaison montante supplémentaire est dans une bande différente d'une transmission précédente.

9. Le dispositif de communication sans fil de la revendication 1, dans lequel la première bande comprend au moins deux porteuses composantes, et dans lequel une deuxième bande comprend au moins une porteuse composante.

10. Dispositif de communication sans fil selon la revendication 1, dans lequel la commutation entre la première bande et une deuxième bande comprend la modification de l'accord d'une chaîne de transmission ou la commutation de chaînes de transmission.

11. Un procédé mis en œuvre par un dispositif de communication sans fil, comprenant :
la détermination de la commutation d'une première porteuse composante (322) d'une première bande à une deuxième porteuse composante ;
la détermination si la deuxième porteuse composante (324) est incluse dans la première bande ; et
dans un cas où il est déterminé que la deuxième porteuse composante est incluse dans la première bande, la transmission d'un signal de liaison montante sur la deuxième porteuse composante ;
dans lequel, dans le cas où une première transmission sur la première porteuse composante est une transmission à 1 port, une deuxième transmission programmée pour la deuxième porteuse composante est une transmission à 2 ports, il est déterminé que la deuxième porteuse composante est dans la première bande, et un état de fonctionnement indique qu'une transmission à 2 ports n'est pas prise en charge, l'étape consistant à transmettre un signal de liaison montante sur la deuxième porteuse composante après un retard de programmation.

12. Un support tangible non transitoire lisible par ordinateur stockant un code exécutable par ordinateur, comprenant :
un code qui, lorsqu'il est exécuté par un processeur, amène le processeur à
déterminer de commuter d'une première porteuse composante (322) d'une première bande à une deuxième porteuse composante ;
déterminer si la deuxième porteuse composante (324) est incluse dans la première bande ;
dans le cas où il est déterminé que la deuxième porteuse composante est incluse dans la première bande, transmettre un signal de liaison montante sur la deuxième porteuse composante ;
dans lequel, dans le cas où une première transmission sur la première porteuse composante est une transmission à 1 port, une deuxième transmission programmée pour la deuxième porteuse composante est une transmission à 2 ports, il est déterminé que la deuxième porteuse composante est dans la première bande, et un état de fonctionnement indique qu'une transmission à 2 ports n'est pas prise en charge, l'étape consistant à transmettre un signal de liaison montante sur la deuxième porteuse composante après un retard de programmation.
